Europäisches Patentamt

European Patent Office

Office européen des brevets

(11) Veröffentlichungsnummer: **0 240 944**
**A1**

## (12) EUROPÄISCHE PATENTANMELDUNG

(21) Anmeldenummer: 87104942.5

(51) Int. Cl.⁴: **B62L 5/00**

(22) Anmeldetag: 03.04.87

(30) Priorität: 05.04.86 DE 3611490

(43) Veröffentlichungstag der Anmeldung:
14.10.87 Patentblatt 87/42

(84) Benannte Vertragsstaaten:
**DE FR GB IT NL**

(71) Anmelder: **Becker, Fritz Wolfgang**
**Alter Berg 25**
**6951 Obrigheim(DE)**

(72) Erfinder: **Becker, Fritz Wolfgang**
**Alter Berg 25**
**6951 Obrigheim(DE)**

(74) Vertreter: **Hach, Hans Karl, Dr.**
**Tarunstrasse 23**
**D-6950 Mosbach-Waldstadt(DE)**

(54) **Fahrrad.**

(57) Bei einem Fahrrad, dessen Tretlagerwelle mit Vortrittschub und Rücktrittleerlauf an die Hinterradachse gekoppelt ist, ist ein an die Tretlagerwelle 4 gekoppeltes Bremsaggregat 18 vorgesehen, das nur bei Rücktritt wirksam wird und dann über einen Bowdenzug 17 eine Bremsbacke 13 gegen die Kraftwirkung einer Rückstellfeder bremsend an das Hinterrad ansetzt.

Fig. 1

EP 0 240 944 A1

# FAHRRAD

Die Erfindung betrifft ein Fahrrad mit einem an einem Rahmen angeordneten Tretlager, dessen Tretlagerwelle über eine endlose Kette mit Vortrittschub und Rücktrittleerlauf an der Hinterradachse gekoppelt ist und mit einer gegen die Rückstellkraft einer Rückstellfeder auf das Hinterrad ansetzbaren, fernbedienbaren Bremsbacke.

Bei einem bekannten Fahrrad der eingangs genannten Art sind zwei handbetätigbare Felgenbremsen vorgesehen, eine Rücktrittbremse fehlt. Solche Fahrräder sind heute üblich, während früher Fahrräder mit Rücktrittbremse üblich waren, wobei das Bremsorgan der Rücktrittbremse in der Hinterradnabe integriert war. Besonders Kinder lernen auch heute noch auf solchen Fahrrädern mit Rücktrittbremse.

Durch den Einsatz von Kettenschaltungen an den Fahrrädern ist die Antriebskette Ursache von Störungen. Da bekannte Rücktrittbremse mit eben dieser Antriebskette betätigt werden, zieht man es bei bekannten Fahrrädern vor, auf die Rücktrittbremse ganz zu verzichten. Das hat aber die unerwünschte Folge, daß Personen, die Fahrräder mit Rücktrittbremse gewohnt sind und nun auf ein solches modernes Fahrrad steigen, im Gefahrenmoment vergeblich die Rücktrittbremse suchen, wodurch es zu Unfällen kommen kann. Aueßrdem sind die Handbremsen für Personen mit kleinen, schwachen Händen nur schwer oder unzureichend zu bedienen, während auf die durch den Pedaltrieb betätigte Rücktrittbremse durch die Beine und Füße auch von schwachen Personen bequem genügend Bremskraft aufgebracht werden kann.

Es ist daher Aufgabe der Erfindung, das Fahrrad der eingangs genannten Art mit einer Rücktrittbremse auszustatten, die die Antriebskette nicht zusätzlich belastet.

Die Erfindung ist dadurch gekennzeichnet, daß ein Bremsaggregat vorgesehen ist, daß im Bremsaggregat ein Bremsorgan achsparallel zur Tretlagerwelle drehbar gelagert ist, daß das Bremsorgan zusammen mit einem Kupplungsteil eine Rutschkupplung bildet und unter Zwischenschaltung eines Freilaufs an die Tretlagerwelle gekoppelt ist, derart, daß bei Vortritt der Tretlagerwelle der Freilauf wirksam wird und bei Rücktritt das Bremsorgan mitgedreht wird und daß das Bremsorgan über ein langgestrecktes Kupplungselement an die Bremsbacke angeschlossen ist, derart, daß es bei Rücktritt die Bremsbacke ansetzt.

Die Wirkung dieses Bremsaggregates ist, jedenfalls subjektiv aus der Sicht des Fahrers, die gleiche wie die Wirkung einer von der Antriebskette betätigten Rücktrittbremse, die er von früher gewohnt ist. Vorteilhaft läßt sich die gekennzeichnete Bremse auch zusätzlich zu den bekannten handbedienbaren Felgenbremsen einsetzen, wodurch eine zusätzliche Sicherheit gegeben ist.

Um zu verhindern, daß zu hohe Bremskräfte auf die Bremsbacke ausgeübt werden, empfiehlt es sich, daß eine Rutschkupplung vorgesehen ist, die der Tretlagerwelle und dem Bremsorgan zwischengeschaltet ist.

Das Bremsaggregat kan von vornherein in das Fahrrad eingebaut sein. Entsprechend bevorzugte Ausgestaltungen sind Gegenstand der Ansprüche 5 und 6.

Das Bremsaggregat kann auch als Nachrüstteil ausgestaltet sein. Eine entsprechend bevorzugte Ausgestaltung ist Gegenstand des Anspruchs 7.

Die Erfindung wird nun anhand der beigefügten Zeichnung näher erläutert.

In der Zeichnung zeigt:

Figur I ein Fahrrad mit einem Bremsaggregat, das neben dem Tretlager angeordnet ist,

Figur 2 das Bremsaggregat aus Figur I im Längsschnitt II,

Figur 3 im Längsschnitt ein Bremsaggregat, das in das Tretlager eines Fahrrades integriert ist,

Figur 4 die Ansicht IV aus Figur 3,

Figur 5 im Längsschnitt ein Bremsaggregat, das an das Tretlager eines Fahrrades angebaut ist,

Figur 6 die Ansicht gemäß dem Pfeil VI aus Figur 5,

Figur 7 ein weiteres Bremsaggregat im Längsschnitt, das an das Tretlager eines Fahrrades angebaut ist,

Figur 8 im Teilschnitt ein anderes Ausführungsbeispiel eines Bremsaggregats, das in das Tretlager eines Fahrrades integriert ist,

Figur 9 die Ansicht gemäß dem Pfeil IX aus Figur 8 bei teilweise aufgebrochenem Tretlagergehäuse,

Figur I0 den Ausschnitt X aus Figur I vergrößert und mit weiteren Details,

Figur II eine Felgenbremse im Teilschnitt XI aus Figur I, und

Figur I2 eine Nabenbremse, die anstelle der Felgenbremse aus Figur II einsetzbar ist.

In der Zeichnung ist mit I ein Fahrrad bezeichnet, an dessen Rahmen 2 ein Tretlager 3 angeordnet ist. Die Tretlagerwelle 4 treibt über eine endlose Kette 5 die Hinterradachse 6. Die Kette 5 ist über zwei Kettenräder 7 und 8 geführt, von denen das Kettenrad 7 drehsteif mit der Tretlagerwelle 4 ist, während das Kettenrad 8, wenn die Tretlagerwelle 4 durch Vor tritt in Pfeilrichtung 9 gedreht wird, das Drehmoment auf die Hinterradachse 6 übertragen kann, dagegen bei Rücktritt - gegen die Pfeilrichtung 9 - leerläuft. Es ist also bei diesem Fahrrad keine durch das Kettenrad 8 auslösbare Rücktrittbremse im Inneren der Nabe l0 des Hinterrades ll vorgesehen.

Ein solches Fahrrad wie bis jetzt beschrieben, ist bekannt und mit Felgenbremsen ausgestattet, deren Bremsbacken über Bowdenzüge mit Handhaben, die an der Lenkstange l2 angeordnet sind, betätigt werden können.

Bei dem in Figur l dargestellten Fahrrad ist die Bremsbacke l3 einer Felgenbremse l4 auf die Felge l5 des Hinterrades ll ansetzbar. Auf diese Bremsbacke wirkt eine Rückstellfeder l6, die das Bestreben hat, die Bremsbacke l3 in ihrer gezeichneten, unwirksamen Stellung zu halten und deren Rückstellkraft überwunden werden muß, wenn die Bremsbacke angesetzt wird.

Zur Betätigung der Bremsbacke l3 dient ein Bowdenzug l7, der an ein Bremsaggregat l8 gekuppelt ist. Das Bremsaggregat l8 kann als Nachrüstteil oder von vornherein an dem Fahrrad montiert sein.

Das Bremsaggregat l8 weist ein gesondertes Gehäuse 20 auf, innerhalb dessen eine Bremswelle 2l achsparallel zur Tretlagerwelle 4 drehbar in Kugellagern l9, 22 gelagert ist. Das Bremsaggregat l8 ist neben dem Tretlager 3 am Rahmen 2 befestigt. Auf die Bremswelle 2l ist ein Antriebsritzel 23 gesteckt, das mit dem Kettenrad 7 kämmt. Mit 24 ist ein Freilauf bezeichnet, der dem Antriebsritzel 23 und der Bremswelle 2l derart zwischengeordnet ist, daß bei Vortritt gemäß Pfeil 9 der Freilauf wirksam wird, dagegen bei Rücktritt Drehmoment von der Kette 5 auf die Bremswelle 2l über tragen wird.

Auf die Bremswelle 2l steckt drehsteif eine Kupplungsscheibe 25. Ein nach Art einer Scheibe ausgestattetes Bremsorgan 26 ist auf die Bremswelle 2l gesteckt und gegenüber der Bremswelle drehbar. Das Bremsorgan 26 liegt, belastet durch eine Druckfeder 27, an der Kupplungsscheibe 25 an. Das Bremsorgan 26 bildet mit der Kupplungsscheibe 25 eine Rutschkupplung 28. Die Druckfeder 27 ist durch Verdrehen der Mutter 29 einstellbar. Am Bremsorgan 26 ist ein radial gerichteter Betätigungsarm 30 befestigt, an dessen freiem, durch einen Schlitz 3l aus dem Bremsgehäuse 20 herausragenden Ende 32 der Bowdenzug l7 eingehängt ist, und zwar mit einer derartigen Orientierung, daß bei Schwenkbewegung des Betätigungsarms 30 durch Rücktritt der Bowdenzug in Richtung auf Ansetzen der Bremsbacke l3 betätigt wird.

Bei Vortritt ist das Bremsaggregat l8 unwirksam und das Antriebsritzel 23 läuft lediglich leer mit. Bei Rücktritt wird die Bremswelle 2l und damit die Kupplungsscheibe 25 gedreht und durch Wirkung der Rutschkupplung 28 das Bremsorgan 26 und der Betätigungsarm 30 mitgenommen. Der Betätigungsarm 30 schwenkt dadurch aus seiner Ruhestellung, die er infolge der Kraftwirkung der Rückstellfeder l6 innehatte, in eine Bremsstellung, in der er über den Bowdenzug die Bremsbacke l3 ansetzt. Überschüssiges Drehmoment wird dabei zwischen Gleitflächen der Rutschkupplung 28 aufgefangen, die entsprechend der Größe des auf die Bremsbacke maximal zu übertragenden Drehmomentes durch entsprechende Vorspannung der Druckfeder 27 justiert ist.

Für den Benutzer des Fahrrads l ergibt sich bei Betrieb die gleiche Situation wie bei einem Fahrrad mit einer vom Kettenrad der Nabe l0 angetriebenen Rücktrittbremse.

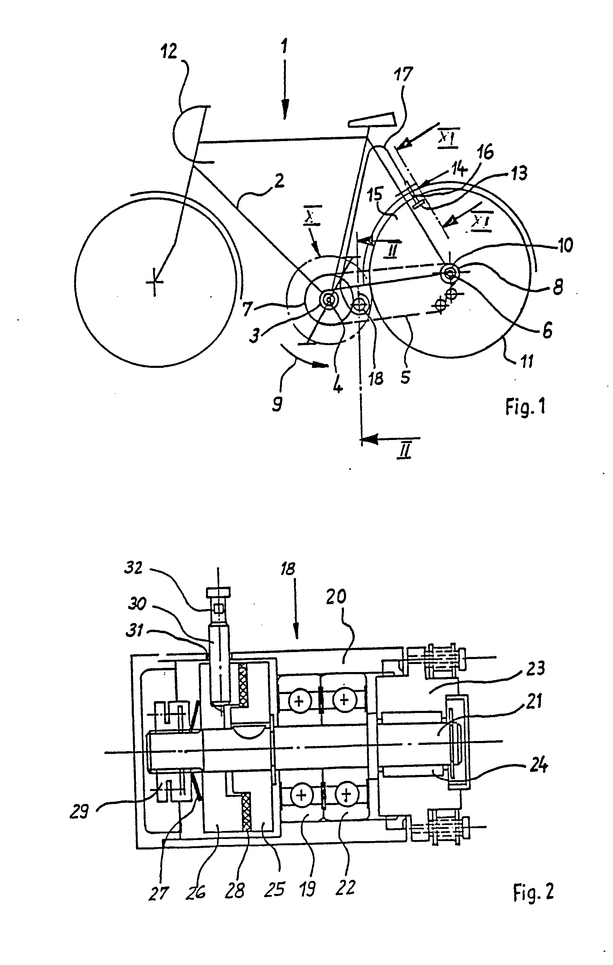

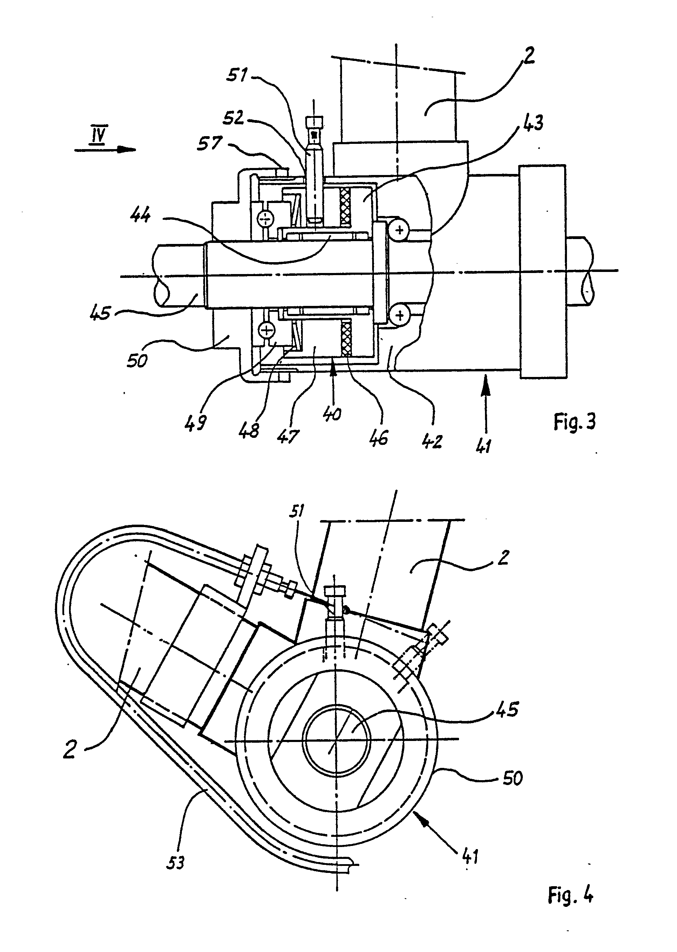

Bei dem in Figur 3 und 4 dargestellten Ausführungsbeispiel ist das Bremsaggregat 40 in das Tretlager 42 integriert und innerhalb des Tretlagergehäuses 4l untergebracht. Eine Kupplungsscheibe 43 ist unter Zwischenschaltung eines Freilaufs 44 auf die Tretlagerwelle 45 gesteckt. Der Freilauf entspricht dem Freilauf 24 aus Figur 2 und ist so orientiert, daß bei Vortritt der Tretlagerwelle 45 kein Drehmoment auf die Kupplungsscheibe 43 übertragen wird, dagegen bei Rücktritt der Tretlagerwelle 45 eine drehsteife Koppelung vorliegt und Drehmoment auf die Kupplungsscheibe 43 übertragen wird.

An die Kupplungsscheibe 43 ist ein dem Bremsorgan 26 entsprechendes Bremsorgan 47 gekuppelt, das scheibenförmig ausgestaltet ist und drehbar auf die Verlängerung der Kupplungsscheibe 43 gesteckt ist. Das Bremsorgan 47 bildet mit der Kupplungsscheibe 43 eine Rutschkupplung 46. Die Rutschkupplung 46 ist durch eine Feder 48 belastet, deren Belastung mit Hilfe des Deckels 50 einstellbar ist. Die Einstellung ist mit dem Gewindering 57 gesichert.

Der Deckel 50 des Tretlagergehäuses ist abschraubbar, so daß die bis jetzt beschriebenen Teile des Bremsaggregates zugänglich sind.

Am Bremsorgan 47 ist ein dem Betätigungsarm 30 entsprechender Betätigungsarm 5l, der radial gerichtet ist, befestigt. Dieser Betätigungsarm ist durch einen Schlitz 52 in der Gehäusewand des Tretlagergehäuses 4l aus dem Gehäuse herausgeführt. Am freien Ende des Betätigungsarms ist ein dem Bowdenzug l7 entsprechender Bowdenzug 53 eingehängt mit der gleichen Orientierung wie im Text zu Figur l und 2 beschrieben. Der Bowdenzug 53 betätigt eine Nabenbremse, die in Figur l2 dargestellt ist.

Bei Vortritt und in Ruhestellung befindet sich der Betätigungsarm 5l in der in Figur 4 ausgezogen gezeichneten Ruhestellung, und zwar unter Kraftwirkung einer der Rückstellfeder l6 entsprechenden Rückstellfeder 54, die auf einen Betätigungshebel 55 für die Nabenbremse wirkt und sich im übrigen an einem Rahmenteil 56 abstützt. Bei Rücktritt schwenkt der Betätigungsarm 5I infolge des nun auf das Bremsorgan 47 übertragenen Drehmoments in die in Figur 4 gestrichelt gezeichnete Stellung, in der die Bremsbacke bremsend an der Nabe angesetzt ist.

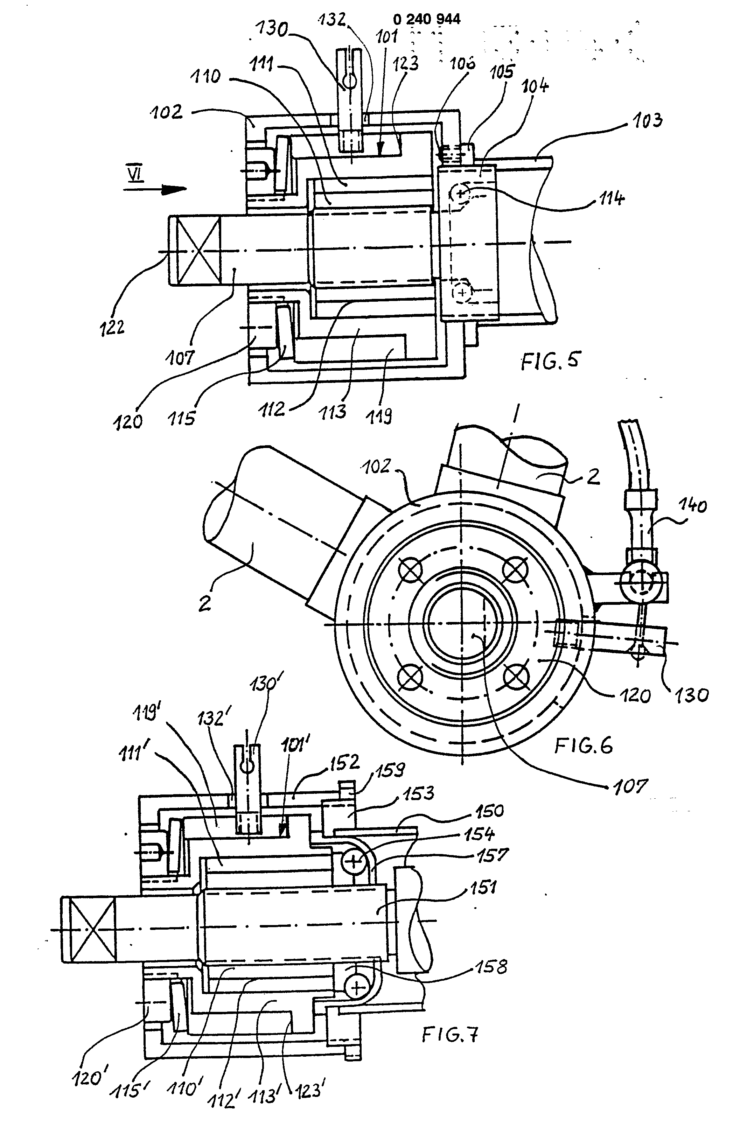

Bei dem in Figur 5 und 6 dargestellten Ausführungsbeispiel ist das Bremsaggregat I0I in einem Gehäuse I02 untergebracht, das seitlich an das Tretlagergehäuse I03 angesetzt ist. Zu diesem Zweck dient ein mit Außengewinde versehener Lagerring I04, der mit dem Tretlagergehäuse I03 und mit dem Bremsaggregatgehäuse I02 verschraubt ist. Auf den Lagerring I04 ist ein Konterring I05 geschraubt. Das Gehäuse ist mit einer Madenschraube I06 gegen Verdrehen gesichert. Die Tretlagerwelle I07 ragt aus dem Gehäuse I02 heraus.

Auf die Tretlagerwelle I07 ist eine Anpaßhülse II0 gesteckt, die mit der Tretlagerwelle fest verbunden ist. Über diese Anpaßhülse II0 ist eine Freilaufhülse III gesteckt mit der Freilauffläche II2. Über die Freilaufhülse III ist ein Profilstück II3 gesteckt, das mit der Freilaufhülse fest verbunden ist. In das Profilstück II3 ist formschlüssig ein Bremsring II9 eingesetzt, der unter der Belastung einer Tellerfeder II5 steht. Diese Tellerfeder II5 stützt sich auf einer selbstsichernden Mutter I20 ab, die mit dem Profilstück II3 verschraubt ist. Die durch die Tellerfeder II5 ausgeübte Belastungskraft ist durch Verstellen der Mutter I20 einjustierbar.

Der Bremsring II9 liegt an einer zur Tretlagerachse I22 senkrechten, ringförmigen Rutschfläche I23 am Profilstück II3 an. Die Teile II0, III, II3, II5 sind koaxial zur Tretlagerachse I22 angeordnet und ausgebildet-

Am Bremsring II9 ist ein sich radial erstreckender Betätigungsarm I30, der dem Betätigungsarm 5I aus Figur 3 und 4 entspricht. Für diesen Betätigungsarm ist ein dem Schlitz 52 entsprechender Schlitz I32 vorgesehen.

Bei Vorwärtstreten dreht sich das Profilstück II3 nicht mit und das Bremsorgan ist unwirksam. Bei Rückwärtstreten dreht sich das Profilstück II3 rückwärts mit und nimmt über die Wirkung der Rutschfläche I23 den Bremsring II9 und damit auch den Betätigungsarm I30 mit, wodurch, wie im Text zu Figur 3 und 4 erläutert, über einen angeschlossenen Bowdenzug I40 eine Bremsbacke betätigt wird.

Die in Figur 5 sichtbaren Teile des Tretlagers sind so ausgebildet wie bei bekannten Tretlagern üblich, so daß, abgesehen von der entsprechenden Verlängerung der Tretlagerwelle, die gleichen Bauteile verwendet werden können.

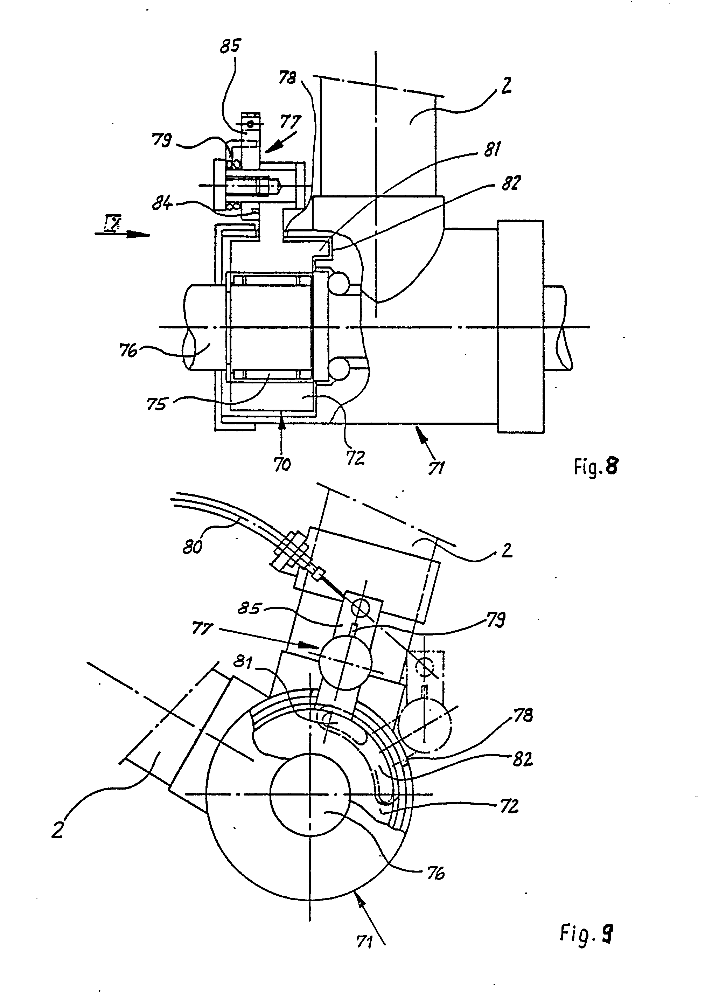

Das in Figur 7 dargestellte Ausführungsbeispiel unterscheidet sich von dem Ausführungsbeispiel nach Figur 5 nur dadurch, daß es an ein anders ausgestaltetes, bekanntes Tretlager angepaßt ist. Das Tretlagergehäuse ist mit I50 und die Tretlagerwelle mit I5I bezeichnet. Das Bremsaggregatgehäuse I52 ist über einen Zwischenring I53 an das Tretlagergehäuse I50 angeschraubt. Eine Kugellagerschale I57 für das Kugellager I54 ist mit einem vorspringenden Wulst I55 versehen. Der Zwischenring I52, der zwischen dem Wulst der Kugellagerschale I55 und dem Tretlagergehäuse I50 montiert ist, wird über die Anstellmutter I58 festgesetzt. Das Bremsaggregatgehäuse ist mit dem Konterring I59 gesichert. Im übrigen ist das Ausführungsbeispiel nach Figur 7 genauso ausgebildet wie das Ausführungsbeispiel nach Figur 5 und 6 und einander entsprechende Teile sind in Figur 7 mit den gleichen Bezugsziffern wie in Figur 5 und 6, jedoch mit einem nachgesetzten "'" bezeichnet.

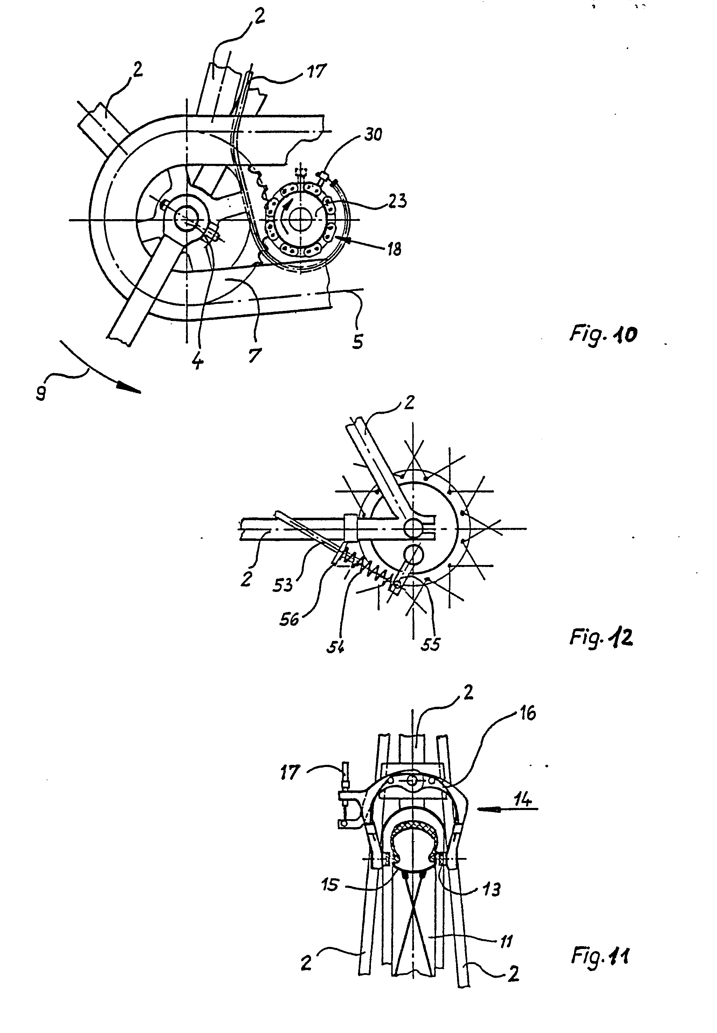

Bei dem in Figur 8 und 9 dargestellen Ausführungsbeispiel ist das Bremsaggregat 70 innerhalb des Tretlagergehäuses 7I untergebracht. Mit 72 ist ein Bremsorgan bezeichnet, das unter Zwischenschaltung eines beidseitig gelagerten Freilaufs 75 auf die Tretlagerwelle 76 gesteckt ist. Bedingt durch den Freilauf wird bei Vortritt der Tretlagerwelle 76 kein Drehmoment auf das Bremsorgan 72 übertragen, dagegen wird bei Rücktritt Drehmoment von der Tretlagerwelle 76 auf das Bremsorgan übertragen.

Am Bremsorgan 72 ist ein radialgerichteter Betätigungsarm 77 befestigt, der durch einen Schlitz 78 aus dem Tretlagergehäuse 7I herausgeführt ist. Der Betätigungsarm ist ein zweiteiliger Gelenkhebel, dessen äußerer Armteil 85 unter Kraftwirkung einer Rückstellfeder 79 gegen einen Anschlag 84 in die in Figur 9 gezeichnete radiale Ruhestellung gedrängt wird. Am freien Ende des Betätigungsarms 77 ist ein Bowdenzug 80 eingehängt, der genauso orientiert und ausgebildet ist wie der Bowdenzug 53 aus Figur 4 und auf eine der Bremsbacke 55 entsprechende Bremsbacke, die an die Hinterradfelge ansetzbar ist, einwirkt gegen die Kraftwirkung einer der Rückstellfeder 54 entsprechenden Rückstellfeder.

Die Schwenkbewegung des Bremsorgans 72 ist an sich durch die begrenzte Längserstreckung des Schlitzes 78 begrenzt. Um deswegen den Betätigungsarm 77 nicht zu belasten, ist die Schwenkbewegung des Bremsorgans auf einen engeren Winkelbereich beschränkt durch eine am Bremsorgan befestigte axial gerichtete Nase 8I, die in einen gebogenen stationären, am Tretlagergehäuse 7I befestigten Schlitzbogen 82 paßt.

Bei Vortritt und in Ruhestellung befinden sich die Teile unter der Kraftwirkung der der Bremsbacke zugeordneten Rückstellfeder und der Rückstellfeder 79 in der in Figur 9 ausgezogen gezeichneten Stellung. Bei Rücktritt geraten die Teile in die in Figur 9 gestrichelt gezeichnete Stellung, in der die Bremsbacke angesetzt ist.

## Ansprüche

I. Fahrrad mit einem an einem Rahmen angeordneten Tretlager, dessen Tretlagerwelle über eine endlose Kette mit Vortrittschub und Rücktrittleerlauf an der Hinterradachse gekoppelt ist und mit einer gegen die Rückstellkraft einer Rückstellfeder auf das Hinterrad ansetzbaren, fernbedienbaren Bremsbacke, dadurch gekennzeichnet,

daß ein Bremsaggregat ( 18 ) vorgesehen ist,

daß im Bremsaggregat ein Bremsorgan ( 26 ) achsparallel zur Tretlagerwelle ( 4 ) drehbar gelagert ist,

daß das Bremsorgan zusammen mit einem Kupplungsteil (25) eine Rutschkupplung bildet und unter Zwischenschaltung eines Freilaufs ( 24 ) an die Tretlagerwelle gekoppelt ist, derart, daß bei Vortritt der Tretlagerwelle der Freilauf wirksam wird und bei Rücktritt das Bremsorgan mitgedreht wird und

daß das Bremsorgan über ein langgestrecktes Kupplungselement ( I7 ) an die Bremsbacke ( I3 ) angeschlossen ist, derart, daß es bei Rücktritt die Bremsbacke ansetzt.

2. Fahrrad nach Anspruch I, dadurch gekennzeichnet,

daß eine Rutschkupplung ( 28 ) vorgesehen ist, die der Tretlagerwelle ( 4 ) und dem Bowdenzug ( I7 ) zwischengeschaltet ist.

3. Fahrrad nach Anspruch 2, dadurch gekennzeichnet,

daß eine Belastungsfeder ( 27 ) für die Rutschkupplung (28) vorgesehen ist.

4. Fahrrad nach einem oder mehreren der vorhergehenden Ansprüche, dadurch gekennzeichnet,

daß das Kupplungselement (I7 ) ein Bowdenzug ist.

5. Fahrrad nach einem der vorhergehenden Ansprüche, dadurch gekennzeichnet,

daß das Bremsorgan ( I0I ) koaxial auf die Tretlagerwelle ( I07 ) gesteckt ist und am Tretlagergehäuse ( I03 ) angebaut ist.

6. Fahrrad nach einem der Ansprüche I bis 4, dadurch gekennzeichnet,

daß das Bremsorgan ( 72 ) koaxial auf die Tretlagerwelle (76) gesteckt ist und innerhalb des Tretlagergehäuses ( 7I ) untergebracht ist.

7. Fahrrad nach einem der Ansprüche I bis 4, dadurch gekennzeichnet,

daß das Bremsorgan ( 26 ) koaxial drehbar auf eine Bremswelle ( 2I ) gesteckt ist,

daß die Bremswelle in einem Bremsengehäuse ( 20 ) angeordnet ist, das am Rahmen ( 2 ) neben dem Tretlager (3) montierbar ist,

daß auf die Bremswelle ein Antriebsritzel ( 23 ) gesteckt ist, das mit dem Kettenrad ( 7 ) kämmt, und

daß der Freilauf ( 24 ) dem Antriebsritzel und der Bremswelle derart zwischengeordnet ist, daß bei Vortritt der Freilauf wirksam ist, dagegen bei Rücktritt Drehmoment übertragen wird.

8. Fahrrad nach einem der vorhergehenden Ansprüche, dadurch gekennzeichnet,

daß ein zum Bremsorgan ( 26 ) radial gerichteter, am Bremsorgan befestigter Betätigungsarm ( 30 ) vorgesehen ist, an dessen freiem Ende das Kupplungselement ( I7 ) angelenkt ist.

9. Fahrrad nach Anspruch 8, dadurch gekennzeichnet,

daß der Betätigungsarm ( 77 ) ein zweiteiliger Gelenkhebel ist, dessen äußerer Armteil ( 85 ) unter Kraftwirkung einer Rückstellfeder ( 79 ) gegen einen Anschlag ( 84 ) in radiale Stellung gedrängt wird und bei Zugbelastung durch das Kupplungsteil gegen die Kraftwirkung der Rückstellfeder schwenkbar ist.

Fig. 1

Fig. 2

P59703-1/5

Fig. 3

Fig. 4

0 240 944

FIG.5

FIG.6

FIG.7

P 59703-3/5

Fig. 8

Fig. 9

Fig. 10

Fig. 12

Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 870 048 (JAVELOT) <br> * Seite 1, Zeile 43 - Seite 2, Zeile 79; Figuren 1-4 * <br><br> --- | 1-5 | B 62 L 5/00 |
| A | GB-A- 9 827 (A. AUBRY)(A.D. 1914) <br> * Seite 1, Zeile 27 - Seite 2, Zeile 23; Figuren 1,2 * <br><br> --- | 1 | |
| A | FR-A- 828 953 (M. REALE) <br><br> --- | | |
| A | FR-A- 899 664 (P. DIF) <br><br><br> ----- | | |

|  |
|---|
| RECHERCHIERTE SACHGEBIETE (Int. Cl.4) |
| B 62 L 5/00 |

Der vorliegende Recherchenbericht wurde für alle Patentansprüche erstellt.

| Recherchenort | Abschlußdatum der Recherche | Prüfer |
|---|---|---|
| DEN HAAG | 13-07-1987 | HARTEVELD C.D.H. |